**Europäisches Patentamt**

**European Patent Office**

**Office européen des brevets**

(19)

(11) Veröffentlichungsnummer : **0 045 912**
**B1**

(12) **EUROPÄISCHE PATENTSCHRIFT**

(45) Veröffentlichungstag der Patentschrift :
05.10.83

(51) Int. Cl.³ : **F 26 B 7/00, B 01 D 3/06**

(21) Anmeldenummer : **81106028.4**

(22) Anmeldetag : **31.07.81**

(54) **Verfahren zur Trocknung von pumpfähigen Suspensionen.**

(30) Priorität : **13.08.80 DE 3030662**

(43) Veröffentlichungstag der Anmeldung :
**17.02.82 Patentblatt 82/07**

(45) Bekanntmachung des Hinweises auf die Patenterteilung : **05.10.83 Patentblatt 83/40**

(84) Benannte Vertragsstaaten :
**CH DE FR GB IT LI NL**

(56) Entgegenhaltungen :
**FR A 428 851**
**FR A 896 433**
**FR A 1 494 725**
**FR A 1 533 162**
**US A 3 105 021**
**US A 3 174 832**

(73) Patentinhaber : **BAYER AG**
**Zentralbereich Patente, Marken und Lizenzen**
**D-5090 Leverkusen 1, Bayerwerk (DE)**

(72) Erfinder : **Casper, Clemens, Dr.**
**Giesenweg 76**
**D-4150 Krefeld (DE)**
Erfinder : **Grenner, Dieter, Dr.**
**Lahnstrasse 1**
**D-4047 Dormagen 1 (DE)**
Erfinder : **Klette, Gerd-Rüdiger, Dr.**
**Bethelstrasse 14**
**D-4150 Krefeld (DE)**
Erfinder : **Tholema, Edzard, Dr.**
**Zum Hahnenberg 3**
**D-5068 Odenthal (DE)**

## Verfahren zur Trocknung von pumpfähigen Suspensionen

Die Erfindung betrifft ein Verfahren zur Trocknung von pumpfähigen Suspensionen oder Kristallösungen, indem die Flüssigkeit mit einem Feststoffgehalt bis zu 50 Gew.-% unter Förderung bei indirekter Wärmezufuhr und gleichzeitiger Druckentspannung verdampft wird.

Die Trocknung von Kristallösungen und Suspensionen erfolgt über die Verdampfung der flüssigen Phase. Das Ausgangsprodukt liegt in einer fließfähigen Form vor, wobei die flüssige Phase im Übergewicht ist und der Feststoff sich dispers in der Flüssigkeit verteilt. Während der Verdampfung konzentriert sich die feste Phase auf, wobei das Produkt allmählich in eine Pastenform übergeht, bei der der Feststoff im Übergewicht ist. Durch die flüssige Phase, die in den Lücken sitzt, wird die Paste noch zusammengehalten. Bei weiterer Verdampfung der Restflüssigkeit zerfällt dieser innere Zusammenhalt, die geschlossene Schicht geht in rieselfähiges Pulver über.

Das Hauptproblem besteht durch Anbackung der Produkte an die Wand. Während des Prozeßablaufes wird bei den meisten Produkten eine sehr klebrige Phase durchlaufen, wobei Anbackungen an der Wand entstehen. Werden diese Anbackungen nicht direkt wieder von der Wand gelöst, so können Strömungsapparat wie auch Düse schlagartig verstopfen.

Bekannt ist die Walzentrocknung, bei der das Ausgangsprodukt auf eine beheizte Walze gesprüht wird. Dabei bildet sich eine dünne Schicht, aus der die flüssige Komponente ausdampft. Der Feststoff wird dann an einer bestimmten Stelle abgeschabt.

Dieses Verfahren hat den Nachteil, daß meistens sehr dünne Schichten des Produktes mechanisch abgeschabt werden müssen, was evtl. die Qualität des Produktes herabsetzt. Die drehenden Teile sind störanfällig. Die Düsen zum Versprühen neigen zu Verstopfungen. Außerdem fallen hohe Investitions- und Betriebskosten an.

Weiter wird die Sprühtrocknung eingesetzt, bei der das Produkt unter Druck aufgeheizt und mit Hilfe von Treibdampf in einer Düse zerstäubt wird. Es bilden sich Tröpfchen, aus denen infolge der Entspannung und Wärmezufuhr durch den Treibdampf die flüssige Phase ausdampft. Der Feststoff rieselt in einem großen Behälter abwärts, wo die Resttrocknung stattfindet, und wird dann am Boden gesammelt und über ein Feststoffaustragsorgan aus dem System gefördert.

Die Sprühtrocknung ist sehr empfindlich gegen Änderung der Verfahrensbedingungen, wodurch hier ein hoher Aufwand betrieben werden muß. Der Einsatz von Treibdampf ist nicht billig. Der anfallende Feststoff mit geringem Schüttgewicht ist schwierig zu verpacken.

Auch ist ein Schaufeltrockner mit selbstreinigendem Element gebräuchlich, bei dem auf einer Welle Schaufeln angebracht sind, durch die das Produkt gefördert, quer durchmischt und die Wand krustenfrei gehalten wird. Der entstehende Dampf wird über einen Dampfdom abgeführt. Um Anbackungen an den Schaufeln zu verhindern, sind selbstreinigende Elemente angebracht.

Beim Schaufeltrockner können sich wärmeempfindliche Produkte an den drehenden Teilen ansetzen, die, nachdem sie längere Zeit der Wärme ausgesetzt sind, sich ablösen und dann die Qualität des Produktes wesentlich mindern können. Die drehenden Teile sind störanfällig. Die Investitions- und Betriebskosten sind hoch.

Darüber hinaus gibt es einen Verdampfer siehe US-A-3 105 021, bei dem ein verunreinigtes Lösungsmittel in einem Schlangenrohr, welches von einem erhitzten Fluid umgeben ist, im ersten Abschnitt erwärmt und im zweiten Abschnitt mit erweiterter Querschnittsfläche verdampft wird, um anschließend in einem ebenfalls erhitzten Separator getrennt zu werden.

Die geringe Förderung mittels Dampf durch Fehlen der Druckentspannung, was noch durch die Erweiterung des Rohres im Dampfbereich betont wird, sowie das Flüssighalten der Harze durch Erwärmung des Separators zeigt, daß nur geringe Mengen an festen Bestandteilen in der Flüssigkeit enthalten sein dürfen, wenn das Schlangenrohr nicht verstopfen soll.

Ebenfalls ist ein Gegenstrom-Verdampfer bekannt (siehe FR-A-1 494 725), bei dem in einem konisch gewickelten Rohr, welches von einem hitzeführenden Behälter umgeben ist, durch Verdampfung ein turbulentes Gemisch aus Flüssigkeit, konzentrierten Bestandteilen und Dampf entsteht, das im anschließenden Separator getrennt wird.

Das hier beschriebene Verfahren hat den Nachteil, daß das turbulente Gemisch nur die Verarbeitung geringer Konzentration von Feststoffen zuläßt, wodurch eine wirtschaftliche Trocknung größerer Mengen nicht möglich ist.

Der Erfindung liegt die Aufgabe zugrunde, ein thermisches Verfahren zur Trocknung von fließfähigen Suspensionen und Kristallösungen in einer einfachen statischen Apparatur zu finden, bei dem das Endprodukt in einer pastösen- oder rieselfähigen Form anfällt.

Die Aufgabe wird erfindungsgemäß dadurch gelöst, daß in einem Mehrphasen-Strömungsrohr, dessen Verhältnis Umfang zur Querschnittfläche 0,05 bis 1,5 [mm$^{-1}$] beträgt, bei einem Durchsatz von 2 bis 50 kg/h pro cm$^2$ Querschnittsfläche alle pfropfenartigen Anbackungen im klebrigen, mit intensiver Wärmezufuhr beaufschlagten Übergangsbereich von breiig auf fest mittels kurzzeitiger Druckanstiege von 0,5-10 bar bei dem Vordruck von 5 bis 20 bar von der Wandung des Strömungsrohres abgeschert werden und daß anschließend die Restfeuchte bis auf 0,1 Gew.-% der festen Teilchen im Strömungsrohr ausgedampft wird.

Für den Fachman ist es überraschend, daß es möglich ist, in einem engen Rohr aus einer dünnflüssigen Suspension einen Feststoff mit sehr geringer Flüssigkeit (bis ~ 0,1 Gew.-%) zu gewinnen, auch wenn in der kritischen Übergangsphase klebrige Anbackungen auftreten, die eigentlich schlagartig zur Verstopfung und damit Abbruch des Trocknungsprozesses führen müßten. Auch ist es erstaunlich, daß zur Explosion neigende Produkte, deren Selbstenzündungstemperatur etwa der Trockentemperatur entspricht, verarbeitet werden können.

Es hat sich nämlich erstaunlicherweise herausgestellt, daß schon kleine, in Zeitabschnitten auftretende Druckanstiege zur Reinigung des Strömungsrohres genügen, um eine intensive Trocknung zu erzielen. Zur Verhinderung der Krustenbildung ist dabei eine hohe Massenstromdichte $\dot{m} = \delta \cdot u$. mit $\delta$ = Dichte und $u$ als Strömungsgeschwindigkeit vorteilhaft. Zusätzlich sorgt eine größere Wärmestromdichte durch ein hohes nur durch die Wärmeempfindlichkeit des Produktes begrenztes Temperaturgefälle vom Heizmittel zum Produkt dafür, daß der kritische Übergangsbereich möglichst klein ist.

Der Vorteil, daß das durch ein Strömungsrohr fließende Produkt eine nahezu gleiche Verweilzeit besitzt, bleibt erhalten, so daß eine hohe Qualität erzeugt werden kann. Durch die allmähliche Entspannung des hohen Druckes wird ein Aufschäumen vermieden. Gleichzeitig wird der Eigendampf zum Fördern genutzt. Auch kann entlang des Strömungsrohres mit geringem technischen Aufwand jedes gewünschte Temperaturprofil eingestellt werden.

Das Rohr ist einfach in der Herstellung und wegen der fehlenden, drehenden Teile unempfindlich. Die Betriebskosten sind günstig, da praktisch der Abfalldampf als Transportmittel benutzt wird.

In einer besonderen Durchführung des Verfahrens wird der Druckanstieg durch mit einer Geschwindigkeit von mindestens 100 m/s vor dem Übergangsbereich strömenden Dampf einschließlich evtl. zugesetzten Treibgas erzeugt.

Normalerweise wird das Produkt vorgeheizt und beim Eintritt in das Strömungsrohr entspannt. Dabei verdampft ein Teil, der die überbleibende Flüssigkeit vorantreibt. Die durch weitere Verdampfung der Flüssigkeit zunehmenden Geschwindigkeiten des Dampfes im Rohr, die bis zu einem Mach betragen können, reichen schon bei 100 m/s aus, Verstopfung nach einem Druckaufbau abzuscheren. Selbstverständlich kann durch zusätzliches gegenüber dem Produkt inertes Gas dieser Vorgang unterstützt werden. Solange keine Verstopfung eintritt, wird durch den schnellen Abtransport der Dämpfe die Verdampfung beschleunigt. Andererseits wird der gleiche Dampf zum Abscheren der Pfropfen von der Wand benutzt. Das gesamte Verfahren ist daher sehr wirtschaftlich.

In einer bevorzugten Durchführung des Verfahrens wird in bestimmten Zeitabständen ein Fremddampf zum Ablösen des Feststoffes zugegeben.

Durch stoßweise Zusetzung eines Fremddampfes, welcher den Feststoff ablöst, ist es möglich, evtl. Krusten leichter von der Wand abzulösen.

In einer anderen Durchführung des Verfahrens wird ein pulsierender Druck mittels einer Pumpe erzeugt.

Durch die pulsierenden Produktströme können Krustenbildungen im Rohr schon im Ansatz behindert werden, so daß die gefürchtete Pfropfbildung nicht auftreten kann.

In einer Ausführungsform ist das Strömungsrohr mit einem Verhältnis von Rohrdurchmesser/Wendelkreisdurchmesser von 0,1 bis 0,5 gewendelt.

Durch die stetige Wendelung des Rohres werden infolge der höheren Gelierkräfte evtl. mitgerissene Flüssigkeitstropfen bzw. feste Teilchen durch die Zentrifugalkräfte umgehend wieder an die Wand zurückgeführt, so daß sie schon wieder dem Verdampfungsprozeß unterliegen, bevor sie von dem Gasstrom mitgerissen werden können.

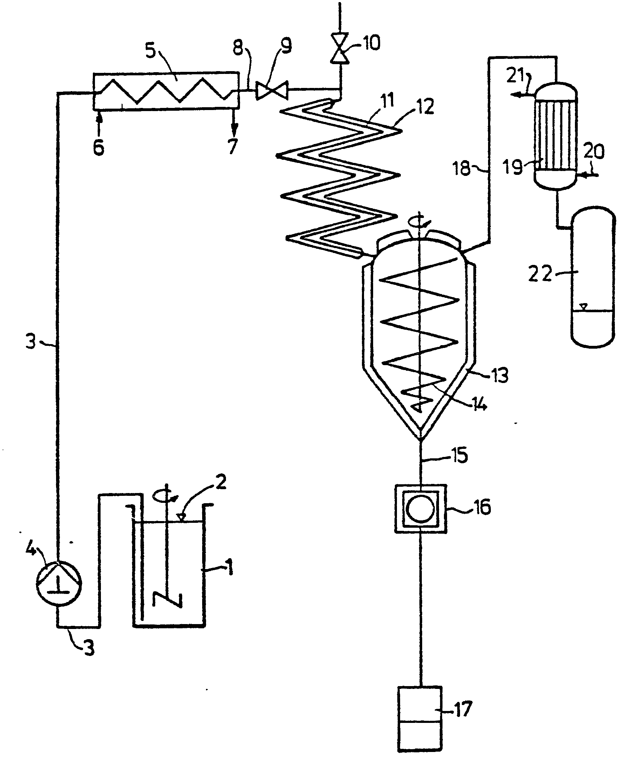

Ein Ausführungsbeispiel eines Schemas einer Anlage ist in der Zeichnung dargestellt und wird im folgenden näher beschrieben.

Die Suspension wird im Gefäß 1 zur Homogenisierung und zur Vermeidung von Thixotropie durch Rührwerk 2 gerührt und über Leitung 3 mittels Pumpe 4 dem Wärmeaustaucher 5 zugeführt, der über Leitungen 6, 7 mit Dampf versorgt wird. Durch Leitung 8 mit Entspannungsdüse 9, evtl. unter Zugabe von Dampf über Ventil 10, wird in dem Wendelrohr 11 eine Schichtenströmung erzeugt. Die Ausdampfung erfolgt über sektional beaufschlagte Heizzonen 12. Im anschließenden Abscheider 13, der mit einer Schabwendel 14 ausgerüstet ist, erfolgt die Trennung in Feststoffe, die über Leitung 15 durch Schleuse 16 in Behälter 17 fallen und in Dampf, der über Leitung 18 nach Durchlaufen des Kondensators 19 mit Kühlwasseranschlüssen 20, 21 im Behälter 22 als Flüssigkeit gesammelt wird.

Selbstverständlich ist es auch möglich, mehrere solcher Systeme aus Strömungsrohr und Abscheider hintereinander zu schalten, wodurch die Brüden der vorhergehenden Stufe für die nachfolgende Stufe zwecks Energieeinsparung ausgenutzt werden können.

Beispiele

1. Trocknung von organischem Farbstoff

Ausgangsprodukt : 50 %ige wäßrige Lösung mit organischem Farbstoff
Apparatur : gewendeltes Strömungsrohr Innendurchmesser 9 mm gestreckte Rohrlänge 3 m
Betriebsbedingungen :
    Aufheizung des Ausgangsprodukts auf 98 °C
    Heizmittel : Marlothermöl
    Heizmitteltemperatur : 165 °C
    Vordruck : 12-20 bar
    Druck Abscheider : 170 mbar
    Temperatur Abscheider : 60 °C
    Produktdurchsatz : ~8 kg/h

Erzielte Restfeuchte des Produkts : 3 %.

2. Rückstandsaufarbeitung von Abwässern

Ausgangsprodukt : wäßrige Lösung bestehend aus 90 % Wasser ; 6,1 % NACNS ; 3,5 % NACl ; 0,4 % organische Rückstände

Apparatur : gewendeltes Strömungsrohr Innendurchmesser 15 mm gestreckte Länge 6 m

Betriebsbedingungen :

Aufheizung des Ausgangsprodukts auf 115 °C

Heizmittel : kondensierender Sattdampf

Heizmitteltemperatur : 125 °C

Vordruck : 12/16 bar

Druck Abscheider : 250 mbar

Temperatur Abscheider : 70 °C

Produktdurchsatz : 38 kg/h

Erzieltes Endprodukt : Feststoffpaste mit 20 % Restfeuchte.

In einer weiteren Untersuchung wurde festgestellt, daß bei einer Heizmitteltemperatur von 160 °C ein rieselfähiges Endprodukt mit einer Restfeuchte von ~ 1 % zu erreichen war.

3. Trocknung von organischem Farbstoffzwischenprodukt

Ausgangsprodukt : 50 %ige wäßrige Lösung mit organischem Farbstoff (1-Amino-2-brom-4-hydroxy-anthrachinon)

Apparatur : gewendeltes Strömungsrohr Innendurchmesser 9 mm gestreckte Rohrlänge 3 m

Betriebsbedingungen :

Aufheizung des Ausgangsprodukts auf 98 °C

Heizmittel : Marlothermöl

Heizmitteltemperatur : 165 °C

Vordruck : 12-20 bar

Abscheider : 170 mbar

Kondensator : 60 °C

Produktdurchsatz : 8 kg/h

Erzielte Restfeuchte des Produkts : 0,1 %.

**Ansprüche**

1. Verfahren zur Trocknung von pumpfähigen Suspensionen oder Kristallösungen, indem die Flüssigkeit mit einem Feststoffgehalt bis zu 50 Gew.-% unter Förderung bei indirekter Wärmezufuhr und gleichzeitiger Druckentspannung verdampft wird, dadurch gekennzeichnet, daß in einem Mehrphasen-Strömungsrohr, dessen Verhältnis Umfang zur Querschnittsfläche 0,05 bis 1, 5 [mm$^{-1}$] beträgt, bei einem Durchsatz von 2 bis 50 kg/h pro cm$^2$ Querschnittsfläche alle pfropfenartigen Anbackungen im klebrigen, mit intensiver Wärmezufuhr beaufschlagten Übergangsbereich von breiig auf fest mittels kurzzeitiger Druckanstiege von 0,5-10 bar bei dem Vordruck von 5 bis 20 bar von der Wand des Strömungsrohres abgeschert werden und daß anschließend die Restfeuchte bis auf 0,1 Gew.-% des festen Teilchens im Strömungsrohr ausgedampft wird.

2. Verfahren nach Anspruch 1, dadurch gekennzeichnet, daß der Druckanstieg durch mit einer Geschwindigkeit von mindestens 100 m/s vor dem Übergangsbereich strömenden Dampf einschließlich evtl. zugesetzten Treibgas erzeugt wird.

3. Verfahren nach Anspruch 1, dadurch gekennzeichnet, daß ein pulsierender Druck mittels einer Pumpe erzeugt wird.

4. Verfahren nach Anspruch 1, dadurch gekennzeichnet, daß in bestimmten Zeitabständen ein Fremddampf zum Anlösen des Feststoffes zugegeben wird.

5. Verfahren nach Anspruch 1 bis 4, dadurch gekennzeichnet, daß das Strömungsrohr mit einem Verhältnis von Rohrdurchmesser zu Wendelkreisdurchmesser von 0,1 bis 0,5 gewendelt ist.

**Claims**

1. A process for drying pumpable suspensions or crystal solutions in which the liquid having a solids content of up to 50 % by weight is evaporated during transport by the indirect application of heat accompanied by the release of pressure, characterised in that, in a multiphase flow tube, in which the ratio of circumference to cross-sectional area is from 0.05 to 1.5 [mm$^{-1}$], and with a throughput of from 2 to 50 kg/h per square centimetre of cross-sectional area, any plug-like deposits in the tacky paste-to-solid transitional zone subjected to intense heating are sheared off from the wall of the flow tube by brief increases in pressure of from 0.5 to 10 bars beyond the system pressure of 5 to 20 bars, and in that the moisture still present in the solid particles is then removed by evaporation in the flow tube to a residue of 0.1 % by weight.

2. A process according to Claim 1, characterised in that the increase in pressure is produced by vapour, including any propellent gas added, flowing at a rate of at least 100 m/s before reaching the transition zone.

3. A process according to Claim 1, characterised in that a pulsating pressure is generated by means of a pump.

4. A process according to Claim 1, characterised in that a vapour from an external source is added at certain time intervals to remove the solid.

5. A process according to Claim 1 to 4, characterised in that the flow tube is coiled with a ratio of tube diameter to coil diameter of from 0.1 to 0.5.

**Revendications**

1. Procédé pour sécher des suspensions ou des solutions de cristaux pompables, en évaporant le liquide ayant une proportion de matières solides allant jusqu'à 50 % en poids, en circulation, avec une arrivée indirecte de chaleur et détente simultanée de pression, caractérisé en ce que dans un tube d'écoulement à plusieurs phases, dont le rapport entre la périphérie et la surface en section transversale est de 0,05 à 1,5 [mm⁻¹], avec un débit de 2 à 50 kg/h par cm² de surface en section transversale, on détache de la paroi du tube d'écoulement toutes les agglomérations du type bouchon dans la zone de transition collante, de visqueuse à solide, attaquée par une arrivée intensive de chaleur, au moyen d'accroissements de pression de peu de durée, de 0,5-10 bars, avec une pression préliminaire de 5 à 20 bars, et en ce qu'ensuite l'humidité restante est évaporée jusqu'à 0,1 % en poids de particules solides dans le tube d'écoulement.

2. Procédé selon la revendication 1, caractérisé en ce que l'accroissement de pression est produit par de la vapeur, y compris éventuellement un gaz moteur ajouté, s'écoulant devant la zone de transition à une vitesse d'au moins 100 m/s.

3. Procédé selon la revendication 1, caractérisé en ce qu'une pression impulsionnelle est produite au moyen d'une pompe.

4. Procédé selon la revendication 1, caractérisé en ce qu'à des intervalles déterminés, une vapeur externe est ajoutée pour enlever la matière solide.

5. Procédé selon les revendications 1 à 4, caractérisé en ce que le tube d'écoulement est enroulé hélicoïdalement avec un rapport entre le diamètre du tube et le diamètre du cercle d'hélice de 0,1 à 0,5.